# EUROPEAN PATENT SPECIFICATION

(11) **EP 1 719 722 B1**
(45) Date of publication and mention of the grant of the patent: **17.09.2008**
(21) Application number: 06008907.5
(22) Date of filing: 28.04.2006
(51) Int. Cl.: B65G 53/22, B65D 88/72

(54) **Fluidification device for granular material**
Einrichtung zur Fluidisierung von körnigem Gut
Dispositif de fluidisation de matériaux granulé

(30) Priority: 02.05.2005 IT VR20050050
(43) Date of publication of application: 08.11.2006
(73) Proprietor: Moretto S.p.A., 35010 Massanzago PD (IT)
(72) Inventor: Critelli, Federico, 35010 Viganza (Padova) (IT)
(74) Representative: Reniero, Cirillo Silvano

(56) References cited:
- EP-A- 0 503 423
- DE-B- 1 268 062

## Description

The present invention relates to a fluidification device for granular material, particularly useful for fluidifying granular plastics contained in a loading hopper.

In the field of processing plastics materials, the raw material is a loose material, i.e. in granules, and is stored in storage containers of large size for being delivered by a supplier. The granular material is then transferred into containers of medium and small size, e.g. a loading hopper, for continuously feeding molding or processing machines arranged in a working plant to process or transform plastics granular material through various transformation stages,

In the various working stages, as a matter of fact, various needs are to be met, e.g. dehumidification of the granules, such as for a number of hours, while the same are at rest, mixing of the granules with additives and/or dyes, as well as transfer of the granules to the load mouth of a processing machine, in all these stages, a medium-small container (hopper or conveyor) has to be used for containing the granular material waiting to undergo transformation processing. In some working methods, such medium-small containers must be more than one in number, as is required in the dehumidification step, for which both a hopper, in which hot and dry air is caused to flow, and a feeder (conveyor) designed to keep the hopper always full, are to be provided.

More particularly, loading hoppers have in common the fact that, in order to facilitate withdrawal of granular material contained therein, at lower portion thereof a tapering is provided, that reduces its size from a larger cross-section to the size of a lower discharge mouth. In other words, into the same hopper a conveying system with convergent sloping walls is provided which forces granular material to move towards the discharge mouth.

Some loose materials, in those cases in which their granules have uniform size and low cohesion and/or friction among them, can advance with no problems from the top of the hopper to the discharge or drawing mouth thereof,

However, the granules of the loose material may have an irregular shape, e.g. a flat shape, high friction and/or large volume/surface ratio, i.e. configuration features that contribute to make flowing within a loading hopper difficult and sometimes impossible.

In the specific case of granules of plastic materials having an high volume/surface ratio, e.g. granules with an extended or laminar shape, the material as a whole flows with much more difficulty, even because the various granules are by far more subject to electrostatically adhere one to another than the granules with a lower volume/surface ratio, e.g. granules having spherical, cylindrical, cubic or slightly parallelepipedic shape.

Moreover, in case of high friction between stored granular material and the walls of the loading hopper, a substantial wall effect is generated with consequent increase in falling rate differancies between the granules close to the hopper walls, especially when the walls are convergent, and the granules relatively far away from the walls.

In the following description the materials having the above-mentioned problems will be indicated as poorly flowing materials.

To facilitate falling or downward movement of poorly flowing materials contained in loading hoppers so-called "bridge breaker" systems have been suggested in the state of the art. The most common "bridge breaker" systems comprise electrical or pneumatic vibrators installed in the storage hopper, which are usually energized every time a withdrawal of granular material occurs,

Moreover, conventional "bridge breaker" systems have a number of undesired drawbacks in that they cause irregular delivery of granular material from the discharge mouth of the loading hopper, i.e. at a flow rate highly variable in time. Furthermore, vibrations generated by the "bridge breaker" system are transmitted not only to the loading hopper, but also to the rest of the working plant, and thus, if for example the plant comprises a weighing system, measured altered, and thus not reliable values are obtained.

It has already been proposed to solve the above-mentioned wall effect problem by energizing one ore more continuous blades or jets of compressed air, to assist in the fluidification of the granular material owing to the feeding in of compressed air that acts as a fluidification agent. Air supply is activated in the very moment in which granular material delivery begins and goes on until delivery is stopped.

Materials also exist, however, that are insensitive to conventional "bridge breaker" systems and thus make it impossible delivery through the discharge mouth of the loading hopper. Such materials typically comprise coarse ground films or thin wall laminar pieces of plastic material. On the other hand, it is impossible to subject such materials to a grinding operation that could result in a finer granular size, as this would cause excessive degradation of the polymeric material.

Flowing problems in storage containers also arise in plants for processing granular materials of a nature different from plastics.

The main object of the present invention is to provide a new fluidification device for fluidifying poorly flowing granular materials, which is suitable for eliminating or drastically reducing the drawbacks referred to above with reference to the state of the art.

Another object of the present invention is to provide a fluidification device to be installed in a container or loading hopper for a granular material, which allows regular fall or descent of the granules in the hopper, thereby assuring a regular and continuous withdrawal of granular material from a lower discharge mouth without generating vibrations that would damage any handling or measuring systems associated with, or adjacent to, the loading hopper.

Not least object of the present invention is to provide a fluidification device which is highly reliable, easily installable in a loading hopper and can be obtained at competitive production and service costs,

These and other objects, which will better appear below, are obtained through a fluidification device for granular material having a loading hopper for said granular material provided with at least one lower discharged mouth and a opening-closing device for said at least one discharge mouth, characterized in that it comprises at least one nozzle designed to direct directly at least one jet (g₁-gₙ; ga-gf) of pressurized fluid into said loading hopper and suitable for breaking any bridging or resistant zone of granular material, and intermittent pressurized-fluid supplying means in fluid communication with said jet means to generate intermittent jets of pressurized fluid, and in that said at least one nozzle is seated into a suitable seat formed on at least one side wall of said loading hopper.

Advantageously, a fluidification device according to the present invention comprises an electronic control unit to control and synchronize said opening and closing device for the discharge mouth of the loading hopper and the intermittent supplying means of pressurized fluid.

Further features and advantages of the present invention will better appear from the following detailed description of some presently preferred embodiments of a fluidification device for granular material, given with reference to the accompanying drawings, in which:
Figure 1 is an elevational front view which illustrates a conventional loading hopper with no bridge breaker system, containing granular material, and with its lower discharge mouth closed;
Figure 2 is an elevational front view which shows the loading hopper of Figure 1 with its discharge mouth open and with granules of poorly flowing material that have formed an obstruction bridge or barrier blocking the discharge of granular material from the discharge mouth;
Figure 3 is a front view similar to that of Figure 2, but illustrating a fluidification device for granular material according to a first embodiment of the present invention in its first operative step;
Figure 4 is a front view, which shows the fluidification device of Figure 3 in a subsequent operative step;
Figure 5 is a elevational front view which illustrates a fluidification device for granular material according to another embodiment of the present invention in a breaking step for obstruction bridges formed in the granular material;
Figure 6 is a front view which shows the fluidification device of Figure 5 in a subsequent operation step;
Figure 7 is an elevational front view which illustrates the operatrion of a fluidification device for granular material according to still another embodiment of the present invention;
Figure 8 is a top perspective view which illustrates a portion of a loading hopper in a operative step of the fluidification device for granular material according to the present invention;
Figure 9 is a top perspective which illustrates a portion of the loading hopper of Figure 8 in a subsequent operation step of the fluidification device for granular material;
Figure 10 is a side cross-section view of a portion of the loading hopper of Figures 8 and 9, which illustrates the way in which granules of material contained therein are displaced; and
Figure 11 is a top view of the loading hopper of Figures 8, 9 and 10.

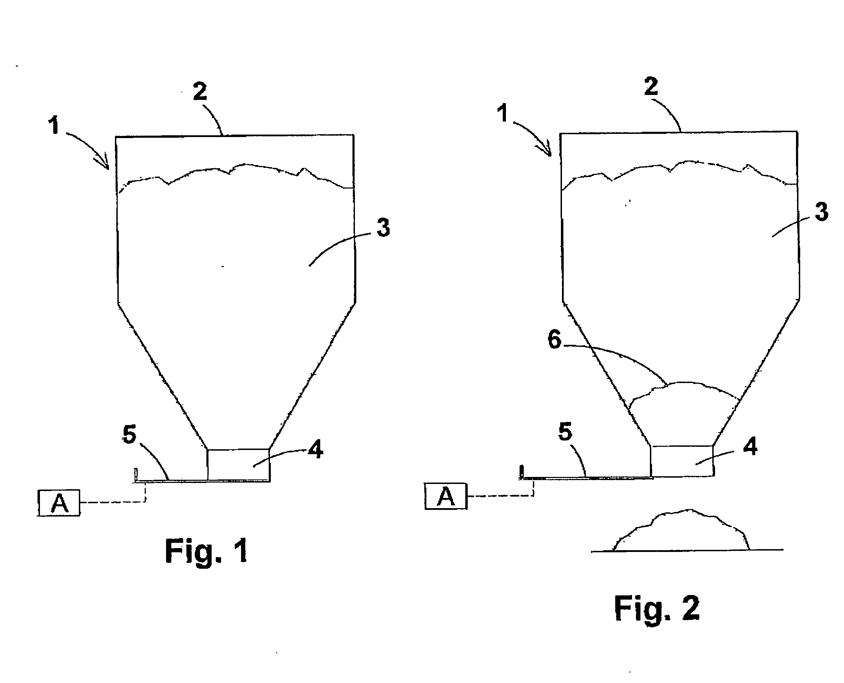

Referring first to Figures 1 and 2, there is illustrated a loading hopper 1 with no "bridge breaker" system and having a relatively large upper opening 2 for loading granular material 3, a relatively narrow lower discharge mouth 4 for delivering material loaded therein and opening-closing means 5 for the discharge mouth 4, e.g. a gate valve, preferably driven by an actuator A of any suitable type, e.g. through a pinion-rack mechanism driven by an electric motor (not shown in drawings),

Preferably, the actuator A can be controlled by an electronic control unit CU, typically a programmable electronic board.

More particularly, as illustrated in Figure 1, the lower discharge mouth 4 is closed by the gate valve 5 and holds the granular material 3 in the loading hopper 1. When the gate valve 5 of the discharge valve 4 of the loading hopper 1 is opened, as illustrated in Figure 2, the granular material 3 can come out therethrough, but especially owing to cohesion, compaction, electrostatic, etc. phenomena among granules and to adhesion phenomena of the granules to the walls of the hopper 1, as mentioned above, the granular material 3 in the hopper 1 often forms one or more bridges or resistant or rigid zones 6, which extend transversally with respect to the hopper 1 above the discharge mouth 4, with consequent stoppage or substantial reduction in the delivery flow from the hopper 1,

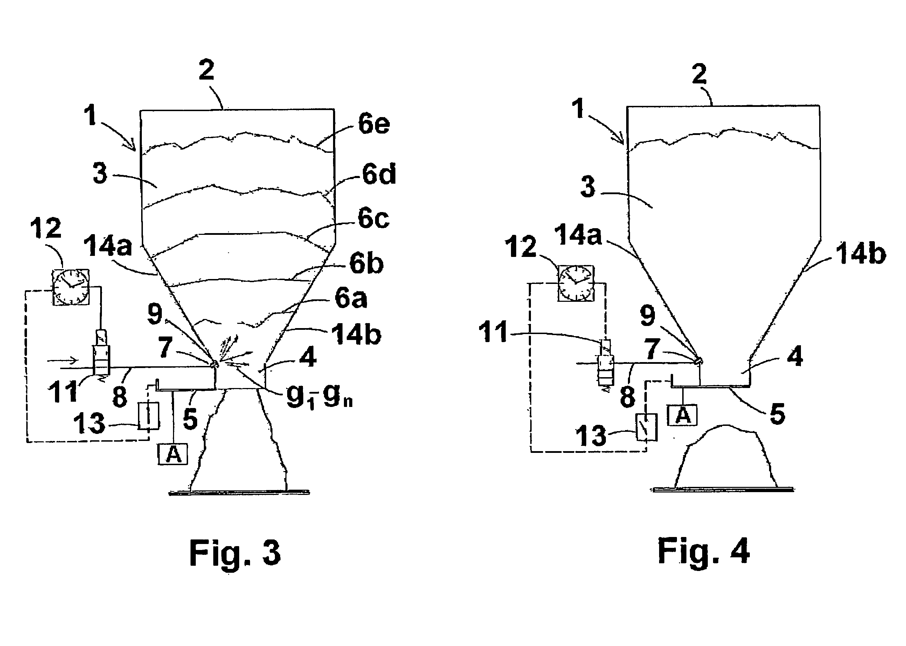

To obviate this serious drawback, according to a first embodiment of the present invention illustrated in Figures 3 and 4, there is provided a fluidification device which comprises one nozzle 7 generating jets g of a pressurized fluid, e.g, compressed air at 4-8 bar, directed to the zone above the discharge mouth 4,

The compressed air is delivered by any suitable compressed-air source (not shown in drawings), such as a compressor of any suitable type, through a suitable supplying duct 8, which can for example pass in a suitable way through the lower discharge mouth 4. Preferably, the nozzle 7 is seated into a suitable seat or through opening (hole) 9 formed in a side wall 14 of the loading hopper 1, preferably close to or at the discharge mouth 4.

The supplying duct 8 is interceptable by a valve means, preferably a two way-two position solenoid valve 11 controlled by a timer 12, controlled at its input by an opened-state detector for the gate valve 5, e.g. a limit switch 13 or any other suitable type of position sensor.

During the operation of the fluidification device illustrated in Figure 3, the gate valve 5 of the loading hopper 1 is opened by its respective actuator A, thereby permitting granular material 3 to be discharged from the discharge mouth 4 of the hopper.

Because of the delivery of granular material 3 through the lower discharge mouth 4, in the remaining granular material 3 in the upper portion of the hopper 1, mainly owing to the descent motion towards the discharge mouth 4, a series of bridges or resistant zones are generated at different levels, e.g. bridges 6a and 6e as shown in Figure 4, which cause substantial zones of agglomerated material to be formed, so as to produce in fact a layered structure in the granular material, each layer being separated from an adjacent layer by a bridge or layer of a greater density suitable for resisting, or at least to considerably slowing, the descent of granular material 3 within the loading hopper 1. Generally speaking, the lower bridges 6a, 6b and 6c formed at sloping lower walls 1a, 1b of the loading hopper 1 are increasingly resistant from the top to the bottom of the hopper. Thus, a condition will be reached such that the bridge 6a, i.e, that nearest to the lower discharge mouth 4 of the loading hopper 1, will constitute such an obstacle as to prevent any granular material 3 above it to fall towards the discharge mouth 4 thereby interrupting the delivery of granular material from the hopper.

Opening of the gate valve 5 is detected by the limit switch 13, which transmits an input signal to the timer 12 that in turn generates an output control signals to cause intermittent opening of the solenoid valve 11, Such an intermittent operation of the solenoid valve 11 generates intermittent feeding of compressed air to the nozzle 7 through the duct 8, which results in a sequence of jets g₁ - gₙ suitable for moving and shaking the granular material 3 in the inner zone above the discharge mouth 4 to be generated within a predetermined range. The sequence of jets g₁ - gₙ is suitable for breaking any so treated bridge or resistant zone of material 3, i.e. both the material subject to the breaking action of the jets g₁ - gₙ and that portion of material that above the bridge or resistant zone 6a when this is been destroyed, is thus free to fall towards the discharge mouth 4 and pass through it with no problems.

Obviously, the range of action of each jet in the sequence of jets g₁ - gₙ at the output of the nozzle 7 depends from the pressure of the compressed air fed to the nozzle, the characteristic features of the granular material 3, the load of granular material 3 present in the hopper 1, and other factors.

When a desired or programmed amount of granular material 3 is delivered from the lower discharge mouth 4 of the loading hopper 1, the gate valve 5 is closed by its actuator A, and thus the limit switch 13 is opened, which also results in the cutting-off of the timer 12 and thus of compressed air feeding to nozzle 7.

It was found in practice that by suitably choosing the opening and closing times for the solenoid valve 11 controlled by timer 12 tipically on the base of the parameters detected during experimental tests made with various types of material, including the "poorly flowing granular' material (in the sense specified above), storable in loading hoppers 1 depending upon the power of the jets g₁ - gₙ, it is possible to obtain an almost continous and regular delivery of granular material 3 throughout the discharge mouth 4. A particularly preferred value of the opening and closing time of the solenoid valve 11 has been found to be about 0,3 seconds.

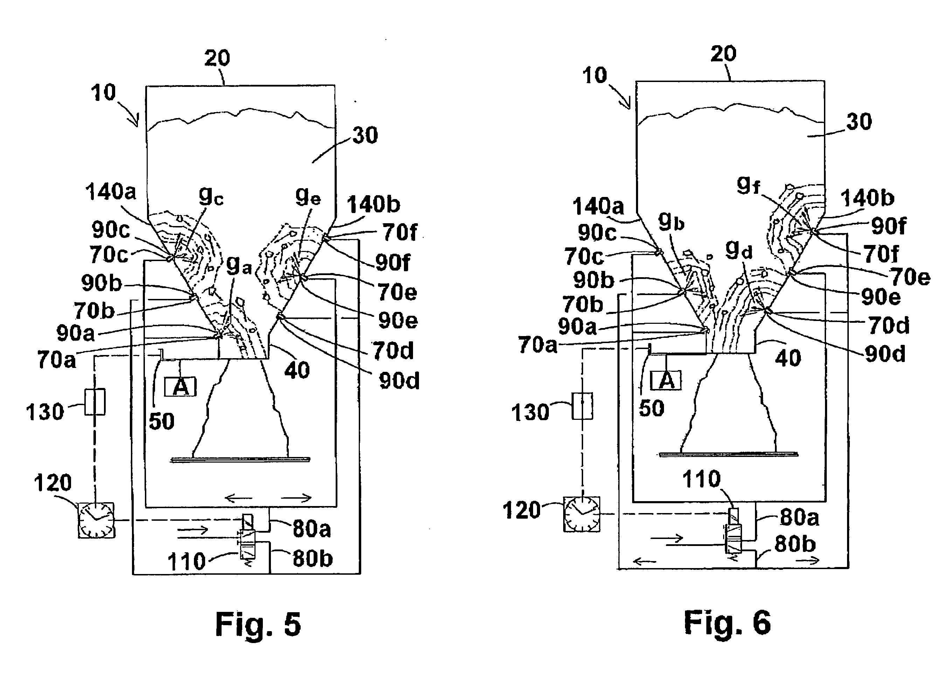

Figures 5 and 6 illustrate a fluidification device for granular material according to another embodiment of the present invention, in which the loading hopper 10 presents, preferably at its inclined lower walls 14a and 14b, a plurality of holes 90a-90f, e.g. six holes, to receive respective nozzles 70a-70f for feeding jets ga - gf of pressurized fluid, e.g. compressed air at 4-8 bar.

The nozzles 70a-70f are designed to generate intermittent jets against the granular material 30, which is stored in the loading hopper 10, whereby pressure waves are generated (as schematically indicated in Figures 5 and 6 with dashed propagation lines). The pressure waves hit and propagate throughout the granular material 30 thus causing it to fluidify as specified above. In other words, the obstruction bridges are broken or the resistant thickened areas or layers are fragmented. Resistant thickened areas are formed especially owing to increased difficulty faced by the material to flow downwards as the side walls of the hopper are inclined and converge towards the discharge mouth 40 of the loading hopper 10. Thanks to the fluidifying action of the jets, the granular material 30 passes through the lower discharge mouth 40 in a substantially uniform and regular manner.

Six jets 70a-70f are illustrated in the drawings, each jet being designed to be energized onto a wall in an asymmetrical way with respect to another wall, and is alternated with respect to the other jets on the same wall.

Particularly, as shown in Figures 5 and 6, a group of three nozzles 70a, 70b, 70c can be provided on the side wall 140a of the loading hopper 10, and a group of three nozzles 70d, 70e, 70f can be provided on the opposite side wall 140a. The nozzles 70a-70f are put in fluid communication with a pressurized fluid supplying source, e.g. a compressed air feeding compressor of any suitable type, by means of two feeding ducts 80a, 80b. As shown in the drawings, duct 80a causes compressed air to be fed to nozzles 70a, 70c, 70e, altemating with respect to nozzles 70b, 70d, and 70f and placed two on the wall 10a and the other on the opposite wall 10b of the hopper 1, whereas duct 80b feeds nozzles 70b, 70d, and 70f alternating with respect to nozzles 70a, 70c, and 70e and placed one on the wall 10a and the other two on the opposite wall 10b of the loading hopper 10.

The feeding ducts 80a and 80b are intercettable by a suitable valve means, preferably a five-way and two-position solenoid valve 110, which is controlled by a timer 120. The timer 120 is controlled at the input by an opened state detector of a gate valve 50 designed to open-close the discharge mouth 40 of the loading hopper 10, e. g. a limit switch 130 or other suitable position sensor.
When the fluidification device is in use, the opening of the gate valve 50 is detected by the limit switch 130, which sends a control signal to the timer 120, which, in turn, alternately switches the solenoid valve 110 between a first and a second operation state. More particularly, in its first operation state (Fig. 5), the solenoid valve 110 is opened in order to allow compressed air to be fed, through the duct 80a, to the nozzles 70a, 70c, and 70e, which generate respective compressed air jets ga, gc, ge, whereas in its second operation state shown in Fig. 6, the solenoid valve 110 allows compressed air to be fed, through the duct 80b, to the nozzles 70b, 70d and 70f, which generate compressed air jets gb, gd, gf, respectively.

Alternating, asymmetrical and to a certain extent opposite jets ga, gc, ge, and gb, gd, gf, which are suitably distributed, e. g. along the entire length of the inclined side walls 140a, 140b of the loading hopper 10, act at different levels within a determined range of action, and in a whole specified area about and above each nozzle, thus carrying out their shaking and/or pulsating action onto parts of granular material 30 which are adjacent to the inclined walls 140a and 140b. Owing to such a shaking action the single granules 110 are de-compacted, i, e. the various granules are released one from the other and thus they are fludified, i, e, they freely fall towards the discharge mouth 40.

It was practically found that, for the most of the granular materials, an optimum opening time of the solenoid valve 110 by means of the timer 120 in order to generate jets ga-gf is, preferably, of the order of 0,3 second for each nozzle group. Such an optimum time permits compressed air jets having a very high flow rate, i. e. provided with an efficient jet energy, to be created by each group of nozzles.

Moreover, the solenoid valve 110 generates pulsations having a relatively low amplitude, whereby undesired vibrations on any sensors, for example weight detectors installed at the loading hopper 10 or in any structure mechanically connected thereto, are not transmitted.

If the jets ga-gf are uninterrupted, i. e. continuous, instead of intermittent and altemating, the granular mass state would soon become static, i. e. such that at the zones near the nozzles 70a-70f the granules would be hit in a reduced and almost ineffective way, since a regular flow towards the discharge mouth 40 would not be ensured.

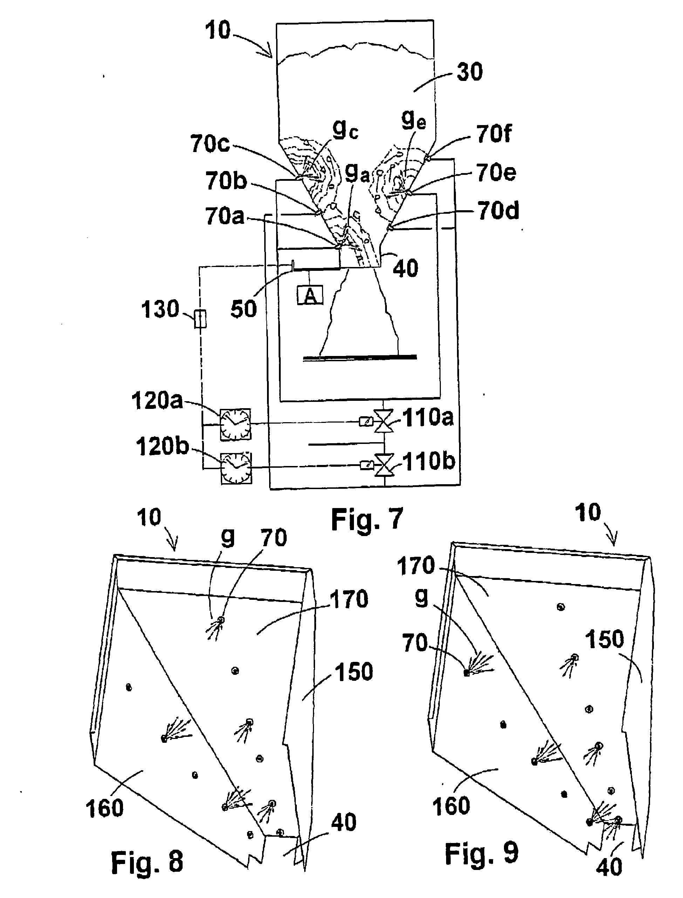

The embodiment illustrated in Figure 7 is similar to that shown in Figures 5 and 6, with the difference that the compressed air fed to nozzles 70a-70f to form jets ga-gf is controlled by two solenoid valves 110a and 100b, These solenoid valves 110a and 110b are controlled by respective timers 120a and 120b, both such timers being controlled by one limit switch 130, which, as above explained, detects the opening of the gate valve 50 designed to open-close the lower discharge mouth 40 of the loading hopper 10.

Advantageously, opening and closing times, respectively tₐ and t_{b}, of the solenoid valves 110a and 110b by the respective timers 120a and 120b, can be the same or different. If the operation times tₐ and t_{b} are different, a condition occurs in which, at some time, e.g. at time tₐ, the nozzles 700a-700f simultaneously work, whereas at other time, e.g. at time t_{b}, they work in an altemating and asymmetrical way, as above explained.

The number of usable solenoid valves, jets and timers is not limitative and can changes depending on loading hopper size and features of the granular material to be fluidified. In practice, it has been demonstrated that one solenoid valve, which switches in order to alternatively feed two series of jets located on two different (inclined) walls of the hopper, is, in the most case, sufficient to achieve a regular descent also of "poorly flowing" granular materials along the loading hopper.

A preferred configuration of a loading hopper 1, designed to contain material which has to be dosed on a suitable weighing device (not shown), is illustrated in Figures 8 to 11, In this configuration, it is critical to obtain a regular descent of the granular material, together with the absence of mechanical vibrations. How it can be noticed, the hopper 1 has a vertical wall 12 and two inclined walls 13 and 14, which converge towards a lower discharge mouth 4 and in which holes or openings are formed, in order to allow respective nozzles 7 to be located therein, thereby creating compressed air jets g. Normally, the vertical wall 12 is not an obstacle to the free descent of the material, but with particularly "poorly flowing" granular materials, it is appropriate to install the jet nozzles thereon. For illustration simplicity, the compressed air feeding system comprising one or more solenoid valves and respective timers is not illustrated.

In Figures 8 and 9 an empty loading hopper 1 is illustrated in two different operation steps, i.e. in two distinct jet working confgurations.

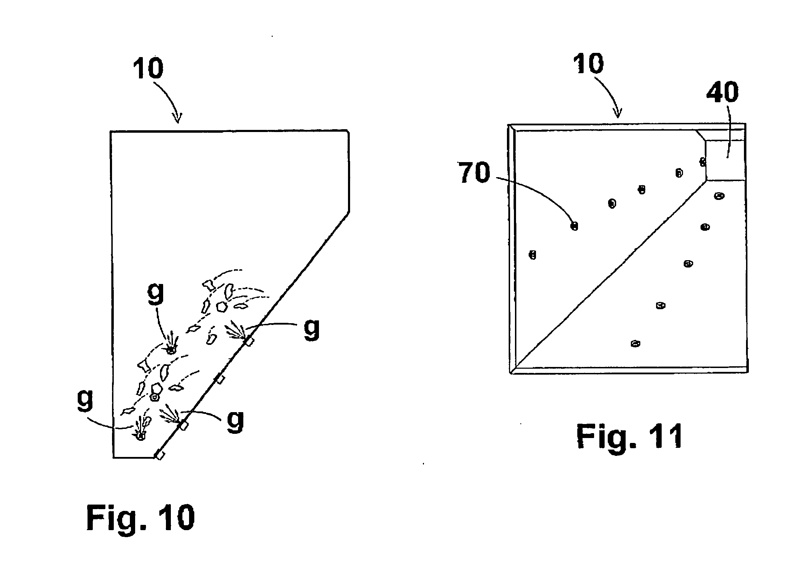

In Figure 10 a hopper is illustrated at an operation time thereof in which some selected jets move the granular material, that can thus fall towards the discharge mouth, as illustrated with dashed lines, The operation is similar to that previously described with reference to the embodiments illustrated in Figures 5 to 7,

The present invention, as described above is susceptible to numerous modifications and variations within the scope as defined by the accompanying claims,

Thus, for example, an electronic programmable control unit (CU), typically a programmable electronic board, can be provided in substitution or addition to the control timer/s of the solenoid valve/s designed to modulate the jets. Owing to the electronic programmable control unit, opening-closing times of the solenoid valve/s can be varied depending on the nature of the granular material stored in the loading hopper.

Moreover, instead of by opening the gate valve 50, the intermittent pressurized fluid feeding to the jets can be controlled by a remote control, such as an infrared ray, via radio, or similar remote control.

## Claims

1. A fluidification device for granular material (3, 30) having a loading hopper (1, 10) for said granular material (3, 30) provided with at least one lower discharged mouth (4, 40) and a opening-closing device (5, 50) for said at least one discharge mouth (4, 40), **characterized in that** it comprises at least one nozzle (7a-7f; 70a-70f) designed to direct directly at least one jet (g₁-gₙ; ga-gf) of pressurized fluid into said loading hopper (1, 10) and suitable for breaking any bridging or resistant zone of granular material (3, 30), and intermittent pressurized-fluid supplying means in fluid communication with said jet means (7a-7f; 70a-70f) to generate intermittent jets of pressurized fluid,
and **in that** said at least one nozzle (70a-70f) is seated into a suitable seat (90a-90f) formed on at least one side wall (140a, 140b) of said loading hopper (1).

2. A fluidification device as claimed in claim 1, **characterized in that** said supplying means of pressurized fluid comprises at least one suorce of pressurized fluid, at least one feeding duct (8; 80a, 80b; 800a, 800b) of pressurized fluid to at least one of said nozzle (7; 7a-7f 70a-70f), and at least one valve means (11; 110;110a, 110b) designed to sequentially intercept the fluid flow of said pressurized fluid for generating said intermittent jets (g₁-gₙ) ga-gf).

3. A fluidification device as claimed in claim 1 or 2, **characterized in that** said intermittent fluid supplying means comprises remote control means.

4. A fluidification device as claimed in claim 1 or 2, **characterized in that** it comprises at least one detector (13;180) designed to detect the opening stade of said opening-closing device (5, 50) of said at least one discharge mouth (4, 40) and at least one timer (12; 120; 120a, 120b) controllable by said at least one detector and designed to control the opening and closing of said at least one valve means (9; 90;90a,90b).

5. A fluidification device as claimed in claim 4, **characterized in that** said at least one timer is designed to control said at least one valve means at a predetermined cadence.

6. A fluidification device as claimed in claim 5, **characterized in that** said predetermined cadence is of about 0,3 sec.

7. A fluidification device as claimed in any claim 2 to 5, **characterized in that** said at least one valve means for intercepting a pressurized fluid comprises a solenoid valve with at least two ways and at least positions (11; 110; 110a, 110b).

8. A fluidification device as claimed in any previous claim, **characterized in that** said nozzle (7) is placed at said lower discharge mouth (4) of said loading hopper (1).

9. A fluidification device as claimed in claim 8, **characterized in that** said nozze (7) is seated in a suitable housing seat arranged at said lower discharge mouth (4) of said loading hopper (1).

10. A fluidification device as claimed in claim 9, **characterized in that** said housing seat for said nozze (7) comprises a through opening (9) arranged at said lower discharging mouth (4) of said loading hopper (1).

11. A fluidification device as claimed in claim 1, **characterized in that** each of said housing seats for each nozzle (70a-70f) comprises a through opening (90a-90f) on said wall (140a, 140b).

12. A fluidification device as claimed in claim 1, **characterized in that** said plurality of nozzles (70a-70f) is fed in an alternating and asymmetric way by said at least one valve means (110; 110a, 110b).

13. A fluidification device as claimed in any previous claim, **characterized in that** it comprises an electronic control unit (CE) arranged to control opening and closing times (tₐ, t_{b}) of said valve means (11; 110; 110a, 110b).

## Patentansprüche

1. Fluidifikationsvorrichtung für Granulat (3, 30) mit einem Aufgabetrichter (1, 10) für das Granulat (3, 30), der mit mindestens einer unteren Austragsmündung (4, 40) und einer Öffnungs-/Schließvorrichtung (5, 50) für die mindestens eine Austragsmündung (4, 40) versehen ist, **dadurch gekennzeichnet, daß** sie aufweist: mindestens eine Düse (7a-7f; 70a-70f), die so gestaltet ist, daß sie mindestens einen Druckfluidstrahl (g₁-gₙ; ga-gf) direkt in den Aufgabetrichter (1, 10) leitet, und zum Aufbrechen jeder Zusammenback- oder Widerstandszone von Granulat (3, 30) geeignet ist, sowie eine Zufuhreinrichtung für intermittierendes Druckfluid in Fluidverbindung mit der Strahleinrichtung (7a-7f; 70a-70f), um intermittierende Druckfluidstrahlen zu erzeugen,
und **dadurch**, daß die mindestens eine Düse (70a-70f) in einen geeigneten Sitz (90a-90f) eingesetzt ist, der an mindestens einer Seitenwand (140a, 140b) des Aufgabetrichters (1) gebildet ist.

2. Fluidifikationsvorrichtung nach Anspruch 1, **dadurch gekennzeichnet, daß** die Zufuhreinrichtung für Druckfluid aufweist: mindestens eine Druckfluidquelle, mindestens eine Zufuhrleitung (8; 80a, 80b; 800a, 800b) für Druckfluid zu mindestens einer Düse (7; 7a-7f; 70a-70f) sowie mindestens eine Ventileinrichtung (11; 110; 110a, 110b), die so gestaltet ist, daß sie den Fluidfluß des Druckfluids zum Erzeugen der intermittierenden Strahlen (d₁-gₙ; ga-gf) nacheinander unterbricht.

3. Fluidifikationsvorrichtung nach Anspruch 1 oder 2, **dadurch gekennzeichnet, daß** die Zufuhreinrichtung für intermittierendes Fluid eine Fernsteuereinrichtung aufweist.

4. Fluidifikationsvorrichtung nach Anspruch 1 oder 2, **dadurch gekennzeichnet, daß** sie aufweist: mindestens einen Detektor (13; 130), der so gestaltet ist, daß er den Öffnungszustand der Öffnungs-/Schließvorrichtung (5; 50) der mindestens einen Austragsmündung (4, 40) detektiert, und mindestens einen Zeitgeber (12; 120; 120a, 120b), der durch den mindestens einen Detektor steuerbar und so gestaltet ist, daß er das Öffnen und Schließen der mindestens einen Ventileinrichtung (9; 90; 90a, 90b) steuert.

5. Fluidifikationsvorrichtung nach Anspruch 4, **dadurch gekennzeichnet, daß** der mindestens eine Zeitgeber so gestaltet ist, daß er die mindestens eine Ventileinrichtung mit einem vorbestimmten Takt steuert.

6. Fluidifikationsvorrichtung nach Anspruch 5, **dadurch gekennzeichnet, daß** der vorbestimmte Takt etwa 0,3 s beträgt.

7. Fluidifikationsvorrichtung nach einem der Ansprüche 2 bis 5, **dadurch gekennzeichnet, daß** die mindestens eine Ventileinrichtung zum Unterbrechen eines Druckfluids ein Magnetventil mit mindestens zwei Wegen und mindestens zwei Stellungen (11; 110; 110a, 110b) aufweist.

8. Fluidifikationsvorrichtung nach einem der vorstehenden Ansprüche, **dadurch gekennzeichnet, daß** die Düse (7) an der unteren Austragsmündung (4) des Aufgabetrichters (1) plaziert ist.

9. Fluidifikationsvorrichtung nach Anspruch 8, **dadurch gekennzeichnet, daß** die Düse (7) in einem geeigneten Gehäusesitz eingesetzt ist, der an der unteren Austragsmündung (4) des Aufgabetrichters (1) angeordnet ist.

10. Fluidifikationsvorrichtung nach Anspruch 9, **dadurch gekennzeichnet, daß** der Gehäusesitz für die Düse (7) eine Durchgangsöffnung (9) aufweist, die an der unteren Austragsmündung des Aufgabetrichters (1) angeordnet ist.

11. Fluidifikationsvorrichtung nach Anspruch 1, **dadurch gekennzeichnet, daß** jeder der Gehäusesitze für jede Düse (70a-70f) eine Durchgangsöffnung (90a-90f) an der Wand (140a, 140b) aufweist.

12. Fluidifikationsvorrichtung nach Anspruch 1, **dadurch gekennzeichnet, daß** die mehreren Düsen (70a-70f) durch die mindestens eine Ventileinrichtung (110; 110a, 110b) abwechselnd und asymmetrisch gespeist werden.

13. Fluidifikationsvorrichtung nach einem der vorstehenden Ansprüche, **dadurch gekennzeichnet, daß** sie eine elektronische Steuereinheit (CE) aufweist, die so angeordnet ist, daß sie Öffnungs- und Schließzeiten (tₐ, t_{b}) der Ventileinrichtung (11; 110; 110a, 110b) steuert.

## Revendications

1. Dispositif de fluidification de matériau granulaire (3, 30) ayant une trémie de chargement (1, 10) pour ledit matériau granulaire (3, 30) dotée d'au moins une bouche de déchargement basse (4,40) et un dispositif d'ouverture-fermeture(5, 50) pour ladite au moins une bouche de déchargement (4, 40), **caractérisé en ce qu'**il comprend au moins une buse (7a-7b ; 70a-70f) conçue pour diriger directement au moins un jet (g1-gn ; ga-gf) de fluide pressurisé dans ladite trémie de chargement (1, 10) et adaptée pour rompre toute zone de matériau granulaire (3, 30) résistant à l'arrachement et des moyens d'approvisionnement en fluide pressurisé intermittent en communication fluide avec lesdits appareils à jet (7a-7f ; 70a-70f) pour générer des jets intermittents de fluide pressurisé,
et **en ce qu'**au moins une buse (70a-70f) est logée dans un logement adapté (90a-90f) formé sur au moins une paroi latérale (140a, 140b) de ladite trémie de chargement (1).

2. Dispositif de fluidification selon la revendication 1, **caractérisé en ce que** lesdits moyens d'approvisionnement en fluide pressurisé comprenant au moins une source de fluide pressurisé, au moins une conduite d'alimentation (8; 80a, 80b; 800a, 800b) de fluide pressurisé jusqu'à ladite au moins une desdites buses (7 ; 7a, 7f; 70a-70f) et au moins un moyen formant valve (11; 110; 110a, 110b) conçu pour intercepter séquentiellement l'écoulement dudit fluide pressurisé pour générer lesdits jets intermittents (gl-gn ; ga-gf).

3. Dispositif de fluidification selon la revendication ou 2, **caractérisé en ce que** lesdits moyens d'approvisionnment en fluide intermittent comprenant un appareil de commande à distance.

4. Dispositif de fluidification selon la revendication 1 ou 2, **caractérisé en ce qu'**il comprend au moins un détecteur (13, 130) conçu pour détecter l'état ouvert dudit dispositif (5, 50) de ladite au moins une bouche de déchargement (4, 40) et au moins un minuteur (12; 120; 120a, 120b) susceptible d'être commandé par ledit au moins un détecteur et conçu pour commander l'ouverture et la fermeture dudit au moins un moyen formant vanne (9 ; 90 ; 90a, 90b).

5. Dispositif de fluidification selon la revendication 4, **caractérisé en ce que** ledit au moins un minuteur est conçu pour commander ledit au moins un moyen formant vanne à une cadence prédéterminée.

6. Dispositif de fluidification selon la revendication 5, **caractérisé en ce que** ladite cadence prédeterminée est d'environ 0,3 s.

7. Dispositif de fluidification selon l'une quelconque des revendications 2 à 5 **caractérisé en ce que** ledit au moins un moyen formant valve pour intercepter un fluide pressurisé comprend une électrovalve à au moins deux voies et au moins deux positions (11; 10 ;110a ; 110b).

8. Dispositif de fluidification selon l'une quelconque des revendications précédentes, **caractérisé en ce que** ladite buse (7) est placée au niveau de ladite bouche de déchargement basse (4) de ladite trémie de chargement (1).

9. Dispositif de fluidification selon la revendication 8 **caractérisé en ce que** ladite buse (7) est logée dans un logement adapté agencé au niveau de ladite bouche de déchargement basse (4) de ladite trémie de chargement (1).

10. Dispositif de fluidification selon la revendication 9, **caractérisé en ce que** ledit logement pour ladite buse comprend une ouverture transversante (9) agencée au de ladite bouche de déchargement basse (4) de ladite trémie de chargement (1).

11. Dispositif de fluidification selon la revendication 1, **caractérisé en ce que** chacun desdits logements pour chaque buse (70a-70f) comprend une ouverture traversante (90a-90f) sur ladite paroi (140a,140b).

12. Dispositif de fluidification selon la revendication 1, **caractérisé en ce que** ladite pluralité de buses (70a-70f) est alimentée de manière alternée et asymétrique par ledit au moins un moyen formant valve (110 ; 110a, 110b).

13. Dispositif de fluidification selon l'une quelconque des revendications précédentes, **caractérisé en ce qu'**il comprend une unité de commande électronique (CE) agencée pour commander les moments d'ouverture et de fermeture (ta, tb) dudit moyen formant valve (11 ; 110 ; 110a, 110b).
